# EUROPEAN PATENT APPLICATION

(11) **EP 4 742 124 A1**
(43) Date of publication of application: **13.05.2026**
(21) Application number: 24211186.2
(22) Date of filing: 06.11.2024
(51) Int. Cl.: G06Q 10/063, G06Q 10/0639

(54) **SYSTEM AND METHOD FOR COMPARING AND ANALYZING PRODUCT EFFICIENCY**

(71) Applicant: The Procter & Gamble Company, Cincinnati, OH 45202 (US)
(72) Inventor: BUENO ROMO, Laura, Newcastle upon Tyne, NE12 9TS (GB); WARDLE, Ian Robert, Newcastle upon Tyne, NE12 9TS (GB); MCGOWAN, Steven Baldwin, Cincinnati, OH, 45202 (US)
(74) Representative: P&G Patent Belgium UK

(57) **Abstract**

A method may include receiving sensor data of task(s) performed using product(s) at each business. A quantity of each task and an amount of consumed product in performing each task may be determined. An amount of time spent per task per guest and an amount of product consumed per task per guest for each product may be determined. For each business, the amount of time spent per task per guest and/or the amount of product consumed per task per guest are compared. The amount of time spent per task per guest at each business may be compared with an average amount of time spent per task per guest among all businesses. The amount of product consumed per task per guest at each business may be compared with an average amount of product consumed per task per guest among all businesses. Feedback may be provided based on the comparing step.

## Description

### FIELD

The present disclosure relates generally to comparing and analyzing product efficiency and more specifically to a system and method for comparing and analyzing product efficiency at one or more business locations.

### BACKGROUND

Algorithms are known which analyze worker efficiency at one or more business locations of a similar type and similar layout. For example, these algorithms routinely monitor an elapsed time for workers at different locations to perform similar tasks. The algorithms then compare the average elapsed time for the workers at different locations to perform similar tasks. The algorithm may then provide feedback to certain locations, such as those locations whose workers have a higher average elapsed time to perform each task.

The discussion of shortcomings and needs existing in the field prior to the present disclosure is in no way an admission that such shortcomings and needs were recognized by those skilled in the art prior to the present disclosure.

### SUMMARY

Various embodiments solve the above-mentioned problems and provide methods and devices useful for comparing and analyzing product efficiency at one or more business locations having a similar business type and/or similar layout.

Although conventional algorithms are known which can be used to monitor worker efficiency at various business locations of a similar layout and/or similar type, it was recognized that these conventional algorithms have drawbacks. For example, these conventional algorithms do not compare and analyze product efficiency (e.g. cleaning products) utilized at multiple business locations. Thus, the system and method disclosed herein were developed in order to compare and analyze product efficiency (e.g. cleaning products) utilized at multiple business locations with a similar business type and/or layout. Such a comparison and analysis may provide feedback, such as to those business locations having a much smaller product efficiency than other business locations that use a same product, in order to address this deficiency.

Also, these conventional algorithms do not compare and analyze the efficiency of multiple products (e.g. multiple cleaning products) being used by workers at a same business location to perform a similar task. Such a comparison may help to identify which of the products is the most efficient. Thus, the system and method disclosed herein were developed in order to compare and analyze product efficiency (e.g. cleaning products) of multiple products used at a same business location. Such a comparison and analysis may provide helpful feedback to the business location, such as to identify which of the multiple cleaning products has the most efficiency, so that the business location can focus on using the identified product in order to maximize efficiency.

In a first set of embodiments, a method for comparing and analyzing product efficiency may be provided. The method may include receiving, at a processor, first data that comprises sensor data captured by one or more sensors of one or more tasks performed on a surface using one or more products at each of a plurality of businesses. The method may also include determining, with the processor, second data that identifies a quantity and a duration of each of the one or more tasks based on the sensor data. The method may also include determining, with the processor, third data that indicates an amount of the one or more products consumed in performing the one or more tasks, based on the sensor data. The method may also include determining, with the processor, fourth data that indicates an amount of time spent per task per guest for each of the one or more products based on the second data and number of guests at each business. The method may also include determining, with the processor, fifth data that indicates an amount of the one or more products consumed per task per guest for each of the one or more products based on the second data, the third data and the number of guests. For each of the plurality of businesses, the method may include comparing, with the processor, the fourth data for each of the one or more products to identify one of the one or more products having a minimum value of the amount of time spent per task per guest, and/or the fifth data for each of the one or more products to identify one of the one or more products having a minimum value of the amount of product consumed per task per guest. For the plurality of businesses, the method may include determining, with the processor, one or more of sixth data that indicates an average of the fourth data across the plurality of the businesses and/or seventh data that indicates an average of the fifth data across the plurality of businesses. For each of the plurality of businesses, the method may include comparing, with the processor, the fourth data for each of the plurality of businesses with the sixth data, and/or the fifth data for each of the plurality of businesses with the seventh data. The method may also include providing, with the processor, eighth data that indicates feedback to one or more of the businesses based on the comparing step.

In a second set of embodiments, a system for comparing and analyzing product efficiency may be provided. The system may include a processor and one or more sensors. The system may also include a memory including one or more sequences of instructions. The memory and the one or more sequences of instructions may be configured to, with the at least one processor, cause the system to perform one or more steps of the method of the first set of embodiments.

These and other features, aspects, and advantages of various embodiments will become better understood with reference to the following description, figures, and claims.

### BRIEF DESCRIPTION OF THE DRAWINGS

Many aspects of this disclosure can be better understood with reference to the following figures, which illustrate examples according to various embodiments.
FIG. 1 is a block diagram that illustrates an example of a system for comparing and analyzing product efficiency, according to an embodiment;
FIGS. 2A through 2E are images that each illustrate an example of a task performed by a worker at a business location, according to an embodiment;
FIGS. 3A and 3B are images that illustrate an example of still images of a product container respectively captured before and after performing a task, according to an embodiment;
FIG. 4 is a flowchart that illustrates an example of steps of a method for comparing and analyzing product efficiency, according to an embodiment;
FIG. 5 is a flowchart that illustrates an example of steps of a method for comparing and analyzing product efficiency, according to an embodiment; and
FIG. 6 is a block diagram that illustrates a computer system upon which an embodiment of the disclosure may be implemented.

It should be understood that the various embodiments are not limited to the examples illustrated in the figures.

### DETAILED DESCRIPTION

### Introduction and Definitions

This disclosure is written to describe the invention to a person having ordinary skill in the art, who will understand that this disclosure is not limited to the specific examples or embodiments described. The examples and embodiments are single instances of the invention which will make a much larger scope apparent to the person having ordinary skill in the art. Unless defined otherwise, all technical and scientific terms used herein have the same meaning as commonly understood by the person having ordinary skill in the art. It is also to be understood that the terminology used herein is for the purpose of describing examples and embodiments only, and is not intended to be limiting, since the scope of the present disclosure will be limited only by the appended claims.

All the features disclosed in this specification (including any accompanying claims, abstract, and drawings) may be replaced by alternative features serving the same, equivalent, or similar purpose, unless expressly stated otherwise. Thus, unless expressly stated otherwise, each feature disclosed is one example only of a generic series of equivalent or similar features. The examples and embodiments described herein are for illustrative purposes only and that various modifications or changes in light thereof will be suggested to the person having ordinary skill in the art and are to be included within the spirit and purview of this application. Many variations and modifications may be made to the embodiments of the disclosure without departing substantially from the spirit and principles of the disclosure. All such modifications and variations are intended to be included herein within the scope of this disclosure. For example, unless otherwise indicated, the present disclosure is not limited to particular materials, reagents, reaction materials, manufacturing processes, or the like, as such can vary. It is also to be understood that the terminology used herein is for purposes of describing particular embodiments only and is not intended to be limiting. It is also possible in the present disclosure that steps can be executed in different sequence where this is logically possible.

All numeric values are herein assumed to be modified by the term "about," whether or not explicitly indicated. The term "about" generally refers to a range of numbers that one of skill in the art would consider equivalent to the recited value (for example, having the same function or result). In many instances, the term "about" may include numbers that are rounded to the nearest significant figure.

In everyday usage, indefinite articles (like "a" or "an") precede countable nouns and noncountable nouns almost never take indefinite articles. It must be noted, therefore, that, as used in this specification and in the claims that follow, the singular forms "a," "an," and "the" include plural referents unless the context clearly dictates otherwise. Thus, for example, reference to "a support" includes a plurality of supports. Particularly when a single countable noun is listed as an element in a claim, this specification will generally use a phrase such as "a single." For example, "a single support."

Unless otherwise specified, all percentages indicating the amount of a component in a composition represent a percent by weight of the component based on the total weight of the composition. The term "mol percent" or "mole percent" generally refers to the percentage that the moles of a particular component are of the total moles that are in a mixture. The sum of the mole fractions for each component in a solution is equal to 1.

Where a range of values is provided, it is understood that each intervening value, to the tenth of the unit of the lower limit (unless the context clearly dictates otherwise), between the upper and lower limit of that range, and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

In this specification and in the claims that follow, reference will be made to a number of terms that shall be defined to have the following meanings unless a contrary intention is apparent.

"Business" generally refers to a commercial facility including a kitchen and/or a restroom which require cleaning using one or more cleaning products.

"Business type" generally refers to a commercial category of a business and may include one of a restaurant, a hotel, a hospital, a nursing home.

"Product" generally refers to a cleaning substance that is used to clean one or more surfaces at a business (e.g. hand dish soap, dishwasher detergent, etc.)

"Object" generally refers to a physical device or machine that is used to clean one or more surfaces at the business with the product (e.g. mop, automatic dishwasher, etc.)

"Action" generally refers to a physical activity performed by a worker to clean a surface at the business with the object and the product (e.g. wiping the floor with a mop, wiping a counter with a cloth, polishing glasses with a cloth, etc.).

"Task" generally refers to a specific action performed by a worker, using a specific product and a specific object in order to clean one or more surfaces at the business.

"Sensor" generally refers to a device (e.g. camera) that is used to capture sensor data (e.g. video data) that can be processed to identify one or more of a product, an object and/or an action of a task being performed by a worker at the business.

### System Overview

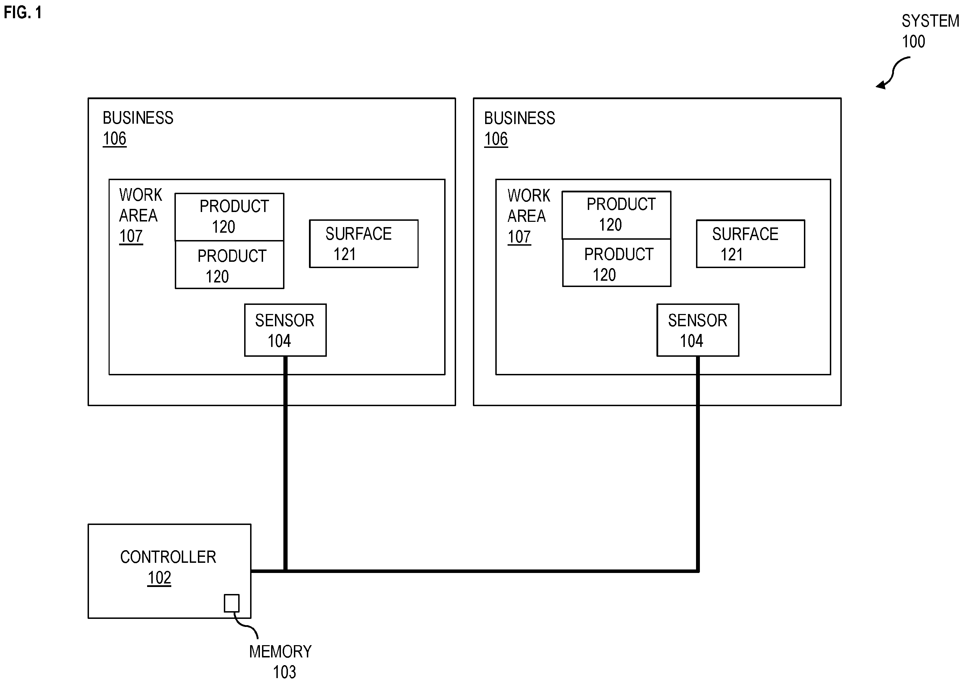

A system for comparing and analyzing product efficiency will now be discussed. FIG. 1 may be a block diagram that illustrates an example of a system 100 for comparing and analyzing product efficiency, according to an embodiment. A plurality of businesses 106 may be provided, where each business 106 may feature a work area 107 where a worker may perform one or more tasks. In one example, the work area 107 may be a kitchen area, a dining area, a storage area, maintenance area, corridors, bedrooms or a bathroom area at the business 106. The work area 107 can be any suitable area where cleaning functions are performed by humans and are desired to be optimized. Although FIG. 1 depicts two businesses 106, this is merely for ease of illustration, less or more than two businesses may be provided.

As shown in FIG. 1, within each work area 107 a surface 121 may be provided that is to be cleaned. In one example embodiment, the surface 121 may be a surface of a kitchen within the work area 107 to be cleaned, such as a counter, a sink, a table or a floor surface. In another example, the surface 121 may be a surface of a bathroom within the work area 107 to be cleaned, such as a floor, a toilet or a sink. In still another example, the surface 121 may be a surface of dishes, glasses, cups and/or utensils that are to be cleaned in a kitchen within the work area 107.

As shown in FIG. 1, the system 100 may include one or more products 120. Although FIG. 1 depicts two products 120 this is for ease of illustration; however, more than two products 120 may be provided at each work area 107 of each business 106. In one example, the products 120 may be cleaning products that are used to clean the surface 121 within the work area 107. In one example, the product 120 may be a cleaning product used to clean a counter or a table within a kitchen of the work area 107. In still another example, the product 120 may be hand dish soap that is used to manually clean dishes and utensils in a sink by a worker. In still another example, the product 120 may be automatic dishwasher detergent that is used to automatically clean dishes within an automatic dishwasher. In still another example, the product 120 may be a floor cleaner product (e.g., premoistened floor wipes or dry floor wipes) that is used to clean the floor surface within the kitchen or bathroom of the work area 107. In still another example, the product 120 may be a cleaning product (e.g. antibacterial product) that is used to manually clean a sink within the kitchen of the work area 107 or a sink or bath within a bathroom of the work area 107. In yet another example, the product 120 may be a cleaning product (e.g., premoistened wipes) utilized to clean tables, chairs, and/or floors in a dining area. In yet another example, the products 120 may be a cleaning product (e.g. premoistened or dry floor wipes and dusting devices) utilized to clean floors and/or shelves, respectively. In yet another example, the product 120may be an air freshening product that is sprayed to remove odors and/or reduce the perception of malodor from the air.

As further shown in FIG. 1, the system 100 may include a sensor 104 at each business work area 107. The sensor 104 may be used to collect data that can be processed to identify one or more attributes of a task performed by a worker. In one example, the sensor 104 is a camera that captures video data. In another example, the sensor 104 is a still camera that captures still image data or still images at a certain frequency (e.g. spaced apart by regular time increments). In yet another example, the sensor 104 can be a non-camera sensor such as water flow sensors, temperatures sensors, weight scales, pH sensor, humidity sensor, conductivity sensor, the like, or combinations thereof. It is worth noting that a plurality of sensors may be utilized at each business work area 107. For example, cameras capturing video data may be utilized in one area, e.g., a kitchen, while a second camera may be utilized in a second area, e.g., a dining area.

As further shown in FIG. 1, the system 100 may include a controller 102 that is communicatively coupled with the sensor 104 from each business work area 107. The controller 102 can process the sensor data received from each sensor 104 to identify the one or more attributes of the task performed by the worker.

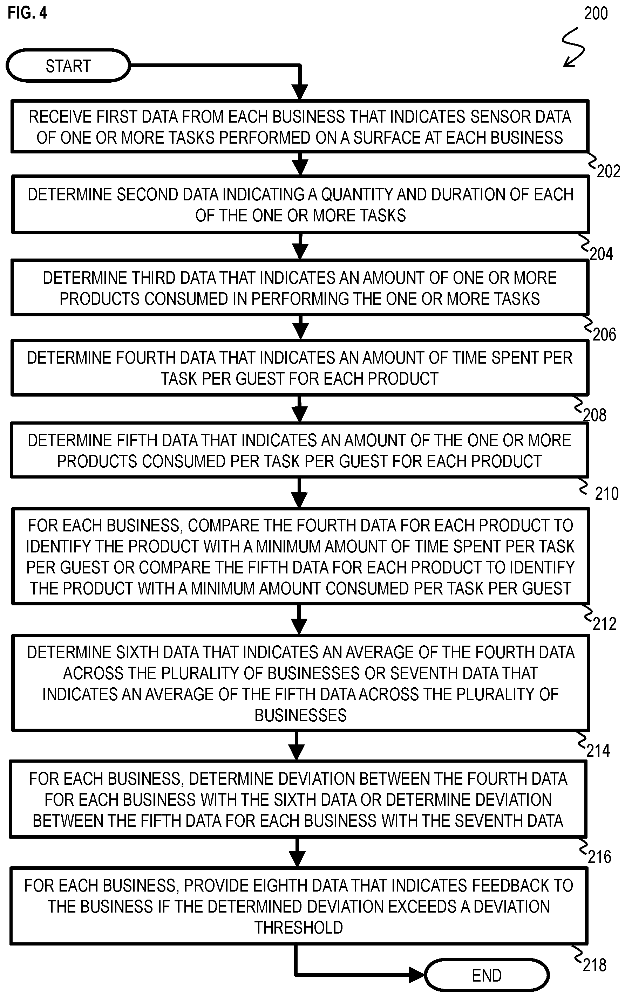

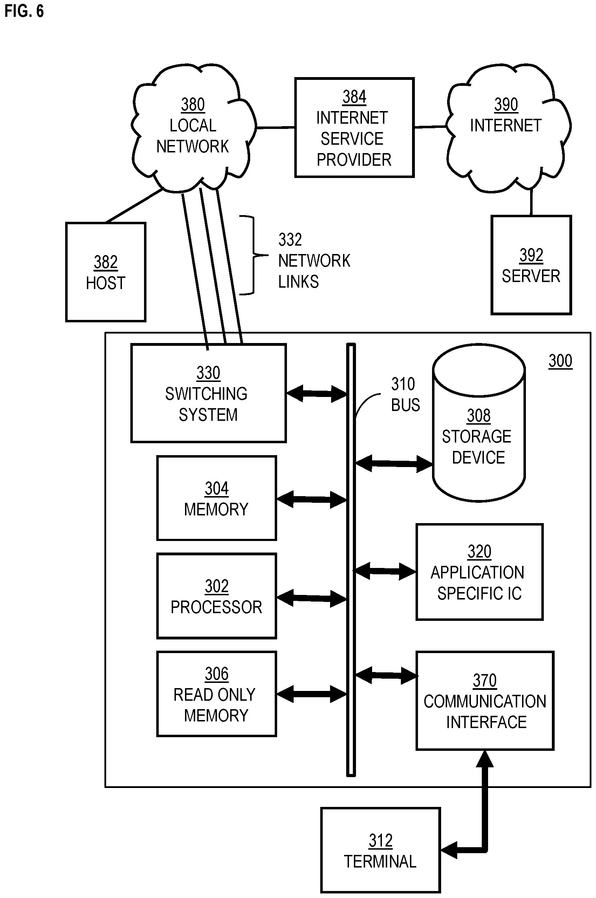

In one example, a task attribute identified by the controller 102 with the sensor data may be an action of a worker performing the task (e.g. wiping a floor surface, wiping a counter surface, loading dishes into an automatic dishwasher, manually hand washing dishes in a sink, etc.). In an example, the controller 102 may include a memory 103 in which sensor data is pre-stored for various known actions (e.g. wiping a floor, wiping a counter, etc.). In this example, the controller 102 may compare the received sensor data from the sensor 104 with the pre-stored sensor data in the memory 103 that correlates sensor data with various known actions. The controller 102 may identify the action of the task based on the action stored in the memory 103 whose pre-stored sensor data closely correlates with the sensor data obtained from the sensor 104. The controller 102 may be a computer system 300 described below with reference to FIG. 6. A memory 103 of the controller 102 may include instructions to perform one or more steps of the method 200 based on the flowchart of FIG. 4.

In another example, a task attribute, identified by the controller 102 with the sensor data, may be an object utilized by the worker in performing the task (e.g. a handle with premoistened or dry pads in wiping the floor, a cloth in wiping the counter, a sponge in hand washing the dishes, etc.).

In yet another example, the task attribute identified by the controller 102 with the sensor data may be the product 120. The controller 102 may process the sensor data to identify the product 120 based on one or more characteristics of the sensor data (e.g. identification of a label on a product container, identification of a shape of the product container, etc.). In another example, the controller 102 may process the sensor data to identify an amount of product in the container (e.g. by processing a still image of the product container and identifying a fill line of the product in the container). In yet another example, the controller 102 may process the sensor data to determine an amount of the product consumed in performing in a task (e.g. by comparing the fill lines identified in still images of the product container captured prior to an after the performance of the task).

The controller 102 may determine a type of a task that is performed based on the identification of the one or more task attributes from the sensor data. In one example, the controller 102 may determine a mopping of the kitchen floor task based on processing the sensor data to identify a mopping motion action, a mop object being used and a floor cleaner product 120. In yet another example, the controller 102 may determine a loading of the automatic dishwasher task based on the processing of the sensor data to identify a dishwasher loading action, an automatic dishwasher object and an automatic dish detergent product 120. In still another example, the controller 102 may determine a manual hand washing of dishes task based on the processing of the sensor data to identify a scrubbing action, a sponge object being used and a dish soap detergent product 120.

The controller 102 may also determine a time duration of each identified task. In one example, the sensor data provided from the sensor 104 to the controller 102 may include additional data regarding the sensor data including one or more of a date that the sensor data was captured, a time period over which the sensor data was captured, an identifier of the business 106 where the sensor data was captured, a number of guests (e.g. capacity for the business or a real time value of the number of guests during sensor data capture) and an identifier of each of the products 120 used in performing the tasks captured by the sensor data. In one example embodiment, the controller 102 may determine a time duration of each task identified in the sensor data based on processing the time period data provided by the sensor 104. In an example, where the time period data of the sensor data indicates that the sensor data was captured from 8 am to 10 am and the controller 102 may determine that a task commenced at 8:24am of the time period data and stopped at 8:44 am of the time period data, the controller 102 determines the task duration based on determining a difference between these two time stamps, or about 20 minutes.

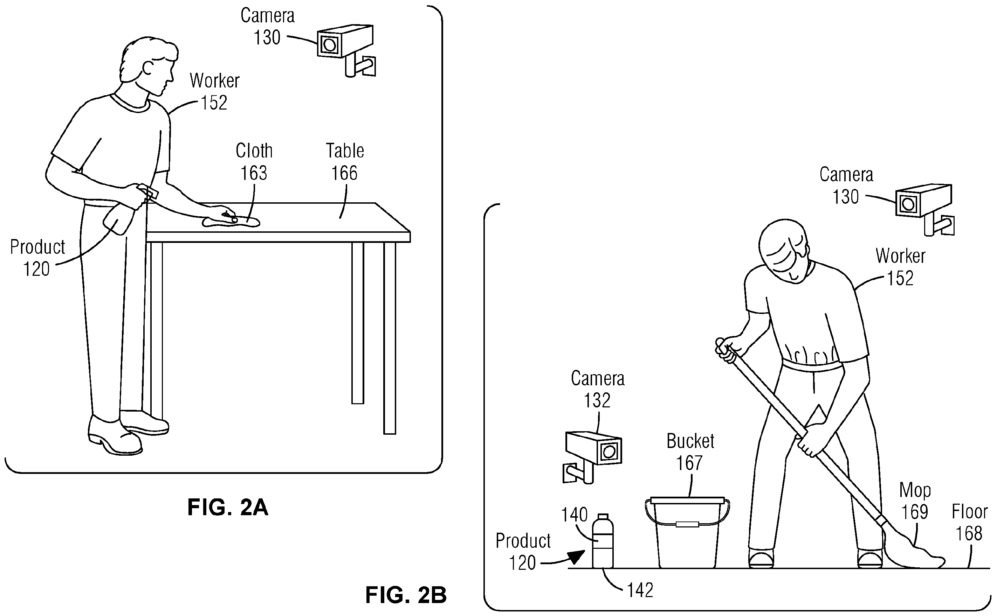

Some examples of various tasks that may be performed in the work area 107 will now be discussed. FIGS. 2A through 2E are images that illustrate examples of tasks performed by a worker 152 at a business 106 location. In these examples of FIGS. 2A through 2E, the sensor 104 may be one or more cameras 130, 132 positioned within the work area 107. In one example, a first camera 130 may be positioned within the work area 107 to capture video data of the worker 152 performing various actions and the captured video data may be processed by the controller 102 to determine an action and an object of the task. Where utilized, the second camera 132 may be a still image camera that captures still images at regular time increments (based on a frame rate of the camera 132). The captured still image data from the second camera 132 may be processed by the controller 102 to identify one or more characteristics of the product 120 (e.g. to identify the product, an amount of product in the container, etc.). The cameras 130, 132 may be positioned within the work area 107 to ensure that the field of view of each camera 130, 132 encompasses the necessary portion of the work area 107 in order to capture the desired data. For example, the camera 130 may be positioned so that the field of view of the camera 130 encompasses the worker 152 while performing the task or encompasses a region of the work area 107 where a particular task is usually performed. The camera 132 may be positioned so that the field of view of the camera 132 encompasses the product 120 within the work area 107. The frame rates of the cameras 130, 132 may be different since the camera 132 need not capture images at the same rate as the camera 130 and instead need only capture images at a beginning and end of the task. In contrast, the camera 130 may capture images of the worker 152 during the task to identify the action and object of the task and thus may have a higher frame rate (e.g. number of images captured per unit time). In contrast, the frame rate of the cameras can be the same. Any suitable frame rate may be utilized.

As shown in FIG. 2A, in one example the worker 152 may be performing a task of cleaning a surface, such as a counter or table 166 within a kitchen of the work area 107. The camera 130 may capture video data of the worker 152 using a cloth 163 object and spraying a product 120 within a container having a spray nozzle onto the table 166. In this example, the video data may be processed by the controller 102 to identify the action (e.g. wiping movement of the worker 152), the object (e.g. cloth 163) and the product (e.g. a cleaning product in a container with a spray nozzle) of the task. In this example, the video data may also be processed by the controller 102 to identify a duration of time of the task (e.g. based on identifying the time stamp of the video data between a beginning and an end of the task). In yet another example, the controller 102 may process the video data to determine the amount of the product 120 consumed during the task based on identifying a number of instances that the product 120 is sprayed from the container with the spray nozzle, where the memory 103 of the controller 102 may have prestored data of an amount of consumed product 120 for each spray instance from the container.

As shown in FIG. 2B, in one example the worker 152 may be performing a task of mopping a surface, such as a floor 168 within a kitchen of the work area 107. The camera 130 may capture video data of the worker 152 using a mop 169 object along with a bucket 167 in which the product 120 is mixed with water. In this example, the video data may be processed by the controller 102 to identify the action (e.g. mopping movement of the worker 152) and the object (e.g. mop 169). In yet another example, the cameras 130, 132 may capture similar data that can be used by the controller 102 to determine a sweeping task of the floor 168. This may be distinguished from the mopping task of the floor based on the controller 102 identifying a different object (e.g. sweeping brush) than the mop 169 in the mopping task of FIG. 2B.

In this example of FIG. 2B, the second camera 132 may capture still image data of the container of the product 120 that is used to identify the product 120. In an example, the controller 102 processes the still image data to identify the label 140 and/or the shape 142 of the product container to identify the product 120. In this example, the memory 103 of the controller 102 may have prestored data that associates a unique label 140 and container shape 142 with one or more specific known products 120 and thus the controller 102 identifies the product 120 based on comparing the still image data with this prestored data in the memory 103. In yet another example, the controller 102 may process a still image from the camera 132 at a beginning and an end of the task to determine the amount of product 120 consumed. This may be achieved by identifying a fill level of the product 120 in the container by processing the still images before and after the task to determine a change in the fill level of the product 120 in the container. The memory 103 may have prestored data that associates a change in fill level for the product 120 container with a value of an amount of consumed product 120.

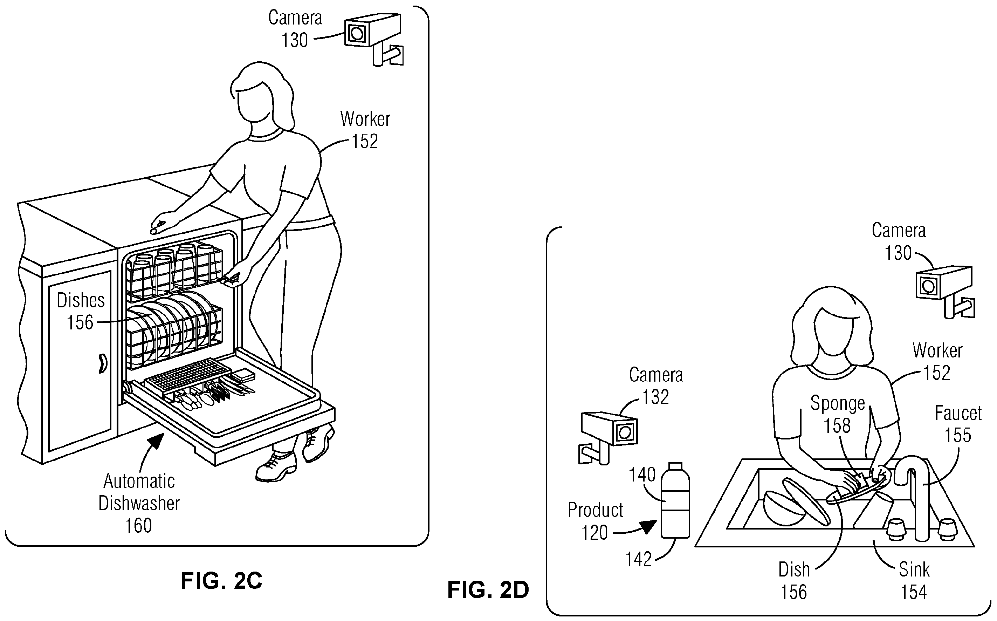

As shown in FIG. 2C, in one example the worker 152 may be performing a task of loading or unloading dishes 156 into or from an automatic dishwasher 160 within a kitchen of the work area 107. The camera 130 may capture video data of the worker 152 loading the dishes 156 into from the automatic dishwasher 160. Alternatively, the camera 130 may capture video data of the worker 152 unloading the dishes 156 from the automatic dishwasher 160. In this example, the video data may be processed by the controller 102 to identify the action (e.g. unloading or unloading the dishes 156), the object (e.g. automatic dishwasher 160) and the product (e.g. automatic dishwasher detergent) of the task. In this example, the video data may also be processed by the controller 102 to identify a duration of time of the task (e.g. based on identifying the time stamp of the video data between a beginning and an end of the loading or unloading task). In yet another example, the controller 102 may process the video data to determine the amount of the product 120 consumed during the task based on identifying the automatic dishwasher 160, where the memory 103 of the controller 102 may have prestored data of an amount of consumed product 120 for each load of the identified automatic dishwasher 160. In still another example embodiment, the memory 103 may have prestored data of an amount of water and/or electricity usage for each load of the identified automatic dishwasher 160. The controller 102 may also identify an amount of water and/or electricity used in performing the automatic dish washing cycle (after the loading task is complete) based on a number of cycles ran by the automatic dishwasher 160.

As shown in FIG. 2D, in one example the worker 152 may be performing a task of manually hand washing dishes 156 in a sink 154 in the work area 107. The camera 130 may capture video data of the worker 152 using a sponge 158 object and using a dish soap product 120 within a container. In this example, the video data may be processed by the controller 102 to identify the action (e.g. hand washing the dishes 156 by the worker 152) and the object (e.g. sponge 158). The second camera 132 may capture still image data that is used to identify the product 120 (e.g. a dish soap cleaning product). In an example, the controller 102 may process the still image data to identify the label 140 and/or the shape 142 of the product container to identify the product 120. In this example, the memory 103 of the controller 102 may have prestored data that associates a unique label 140 and container shape 142 with one or more known hand dish soap products 120 and thus the controller 102 may identify the hand dish soap product 120 based on comparing the still image data with this prestored data in the memory 103. In yet another example, the controller 102 may process a still image from the camera 132 at a beginning and an end of the task to determine the amount of dish soap product 120 consumed. This may be achieved by identifying a fill level of the product 120 in the container by processing the still images before and after the task to determine a change in the fill level of the hand dish soap product 120 in the container. The memory 103 may have prestored data that associates a change in fill level for the dish soap product 120 container with an amount of consumed product 120. Additionally, the controller 102 may determine an amount of water consumed during the manual hand dish washing task based on processing the video data from the camera 130 to identify an amount of time that the faucet 155 was open and filling the sink 154. The memory 103 of the controller 102 may have prestored data that associates an elapsed time of the open faucet 155 with a specific volume of water. In this example, the video data may be processed by the controller 102 to identify the particular faucet 155 which is then used to retrieve the amount of water from the memory 103 that is associated with that particular faucet 155.

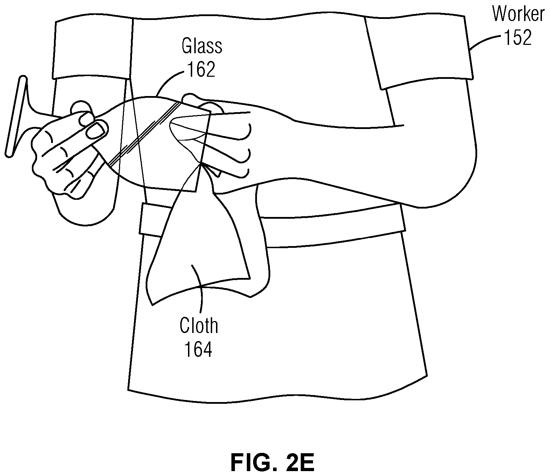

As shown in FIG. 2E, in one example the worker 152 is performing a task of polishing glasses 162 with a cloth 164. In one example, the polishing task may be performed on glasses 162 after being removed from the automatic dishwasher 160. The camera 130 may capture video data of the worker 152 using a cloth 164 object to polish the inside and outside of the glasses 162. In this example, the video data may be processed by the controller 102 to identify the action (e.g. polishing movement of the cloth 164 along an interior and exterior of the glasses 162) and the object (e.g. cloth 164). In this example, the video data may also be processed by the controller 102 to identify a duration of time of the task (e.g. based on identifying the time stamp of the video data between a beginning and an end of the task).

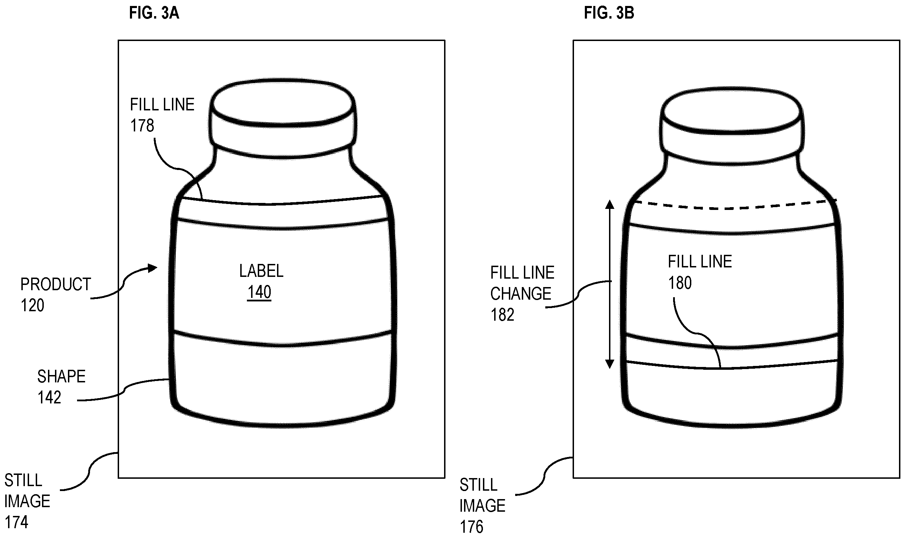

The still image data from the second camera 132 of the product container may be processed by the controller 102 to determine an amount of product 120 consumed during the task. FIGS. 3A and 3B are images that may illustrate an example of still images 174, 176 of a product 120 container respectively captured before and after performing a task. The still images 174, 176 may be determined from the still image data based on the controller 102 identifying the still image 174 corresponding to a commencement of the identified task action (from the video data) and identifying the still image 176 corresponding to an end of the task action (from the video data). As shown in the first still image 174, the controller 102 may process the still image 174 to identify the product 120 based on identifying the label 140 and/or the shape 142 of the container holding the product 120. The controller 102 may also process the still image 174 to determine an initial fill line 178 of the product 120 within the container prior to commencing the task. The controller 102 may also process the still image 176 captured at the end of the task to determine the final fill line 180 of the product 120 within the container at the end of the task. Based on this processing of the images 174, 176 the controller 102 may determine a change in the fill line 182 of the product 120 in the container. The memory 103 may have prestored data that associates a change 182 in fill line from the initial fill line 178 to the final fill line 180 for the product 120 container with a specific value of an amount of consumed product 120.

### Method Overview

A method for comparing and analyzing product efficiency will now be discussed. FIG. 4 is a flowchart that illustrates an example of steps of a method 200 for comparing and analyzing product efficiency. Although steps are depicted in FIG. 4 as integral steps in a particular order for purposes of illustration, one or more steps, or portions thereof, may be performed in a different order, or overlapping in time, in series or in parallel, or are omitted, or one or more additional steps may be added, or the method may be changed in some combination of ways.

In step 202, first data may be received at the controller 102 from one of a plurality of business 106. The first data may indicate sensor data from the sensor 104 of one or more tasks performed at each business 106. In one example, the sensor data may include video data from the camera 130. In another example, the sensor data may also include still image data from the camera 132. The sensor data may include one or more attributes of the sensor data including but not limited to a capture date of the sensor data, a capture time of the sensor data, an identifier of the business, a number of guests at the business (e.g. either a guest capacity or a real time value of the number of guests present at the business during sensor data capture) and an identifier of one or more products 120 utilized during the sensor data capture.

In step 204, second data may be determined by the controller 102 that identifies a quantity and a time duration of each of the one or more tasks captured in the sensor data. In an example, the controller may determine the second data based on processing the first data received in step 202.

To determine a quantity of each task captured in the sensor data, the controller 102 may first identify the specific task (e.g. mopping the floor) based on identifying a specific action (e.g. cleaning the floor) of the task and/or a specific object (e.g. mop, broom, Swiffer^{®}) of the task when processing the video data received from the camera 130. The controller 102 may then count the number of each specific task identified in processing the video data to determine the quantity of each task. In one example, in step 204 the controller 102 determines a number of cycles of the automatic dishwasher 160 at each business 106 based on the sensor data provided from each business 106. This determination may be based on the controller 102 processing the sensor data to identify a number of loading (or unloading) tasks performed using the automatic dishwasher 160. However, in some examples, where the same dishes 156 are run on multiple cycles (since they are not clean after a first cycle), in step 204 the controller 102 determines the number of cycles not solely based on the number of performed loading or unloading cycles but also based on the number of times that the worker 152 activates the automatic dishwasher 160 (e.g. using buttons on a panel of the automatic dishwasher 160).

To determine a time duration of each task captured in the sensor data, the controller 102 may review the capture time data received of the sensor data and identify an initial time stamp (e.g. 8:22am) and a final time stamp (e.g. 8:42am) when the task was respectively commenced and completed in order to determine the time duration (e.g. 20 minutes) of the observed task.

In step 206, third data may be determined that indicates an amount of the one or more products 120 consumed in performing the one or more tasks determined in step 204. In step 206, the controller 102 may process the sensor data received from the sensor 104 in step 202 to determine the amount of each of the one or more products 120 consumed in performing the tasks. In an example, the controller 102 may process the still image data received from the second camera 132 which captured still image data of the product 120 container. In an example, in step 206 the controller 102 may process the still image data to first identify the specific product 120 based on the label 140 and/or the shape 142 of the container holding the product 120. In another example, in step 206 the controller 102 may process the still image data to compare a first still image 174 (FIG. 3A) prior to performing the task with a second still image 176 (FIG. 3B) to determine the change 182 in the fill line of the product 120 in the container. The controller 102 may then compare the change 182 in the fill line with prestored data in the memory 103 that correlates a change in the fill line for each product 120 with a specific consumed volume of each product 120. The controller 102 may then determine the quantity of consumed product 120 for each task based on this processing of the still image data and comparing the change 182 in the fill line with the prestored data in memory 103.

The controller 102 may determine the amount of consumed product 120 based on the number or amount of each task performed that was determined in step 206. In one example, the controller 102 may determine the amount of automatic dishwasher detergent consumed in performing the determined amount of automatic dishwasher 160 cycles from step 206. The memory 103 of the controller 102 may have prestored data that includes an amount of automatic laundry detergent that is consumed for each cycle, based on the particular automatic washing machine 160. In step 206, the controller 102 may determine the amount of consumed automatic dishwasher detergent product 120 (e.g. 500 milliliters) based on the amount of automatic dishwasher cycles (e.g. 5) determined in step 206 and prestored data of the amount of automatic dishwasher detergent consumed per cycle (e.g. 100 milliliters).

In yet another example, the controller 102 may determine the amount of consumed product 120 in step 206 based on processing the video data from the camera 130. In one example, the controller 102 may process the video data from the camera 130 to determine a number of times that the product 120 is sprayed from a spray bottle (FIG. 2A). The memory 103 of the controller 102 may include prestored data that indicates the amount of product 120 consumed for each spray from the spray bottle. Thus, in step 206 the controller 102 may determine the amount of consumed product 120 from the spray bottle of FIG. 2A based on the identified number of sprays from the container coupled with the prestored data in the memory 103 that indicates the amount of consumed product 120 for each spray instance.

In step 208, the controller 102 may determine fourth data that indicates an amount of time spent per task and per guest for each product 120. In one example, in step 208 the controller 102 may determine the amount of time spent per task per guest based on determining the time duration for performing each task from step 204 and dividing this value by the quantity of each respective task from step 204. The controller 102 may then divide this value by the number of guests at the business 106 that was received in step 202. It was recognized that this parameter of the amount of time spent per task per guest for each product 120 may be an effective way to normalize the data so that different products 120 that are typically used to perform the same task can be compared, both within a business 106 and between the plurality of businesses 106. In one example, if the controller 102 in step 208 determines that the amount of time spent per task for the first product 120 is 15 minutes whereas the amount of time spent per task for the second product 120 is 20 minutes, the controller 102 may conclude that the first product 120 is more efficient than the second product 120. For example, if both products 120 are used to clean the table 166 (FIG. 2A) and the first product 120 results in a much smaller amount of time per task per guest, it can be concluded that the first product 120 is more efficient than the second product 120.

The number of guests may be employed in step 208 in order to normalize the data so that a first business 106 (e.g. restaurant) with a capacity for 100 guests can be fairly compared with a second business 106 (e.g. restaurant) with a capacity for 50 guests. In this example, it is to be expected that the area of the table 166 to be cleaned at the first business 106 would be significantly larger than the table 166 to be cleaned at the second business 106, due to the increased guest capacity at the first business 106. Thus, it would be expected that the amount of time spent per task would be greater at the first business 106. The normalized amount of time spent per task per guest factors this in so that the normalized data can be effectively compared not only within a business 106 but between different businesses 106. Where the data may only be compared within a same business 106, in step 208 the controller may just determine the amount of time spent per task, since the number of guests may be assumed to be equal at the same business 106.

In step 208, for the automatic dishwasher 160 cycles, the controller 102 may determine a number of cycles of the automatic dishwasher 160 per guest. In an example, this parameter of the number of automatic dishwasher 160 cycles ran per guest over a certain time period may be an effective normalized parameter with which to compare businesses 106 of a similar type (e.g. restaurants). Thus, in step 208 the controller 102 may determine that a first restaurant business 106 ran 0.8 automatic dishwasher cycles per guest whereas the second restaurant business 106 ran 1.2 automatic dishwasher cycles per guest and thus may utilize this determination later in the method 200 when deciding what type of feedback may be provided to one or more of the businesses.

In step 210, the controller 102 may determine fifth data that indicates an amount of product 120 consumed per task and per guest for each product 120. For example, in step 210 the controller 102 may determine the amount of product consumed per task per guest based on determining the consumed amount of each product 120 from step 206 and dividing this value by the quantity of each respective task from step 204. The controller 102 may then divide this value by the number of guests at the business 106 that was received in step 202. It was recognized that this parameter of the amount of product consumed per task per guest for each product 120 can be an effective way to normalize the data so that different products 120 that are typically used to perform the same task can be compared, both within a business 106 and between the plurality of businesses 106. In one example, if the controller 102 in step 210 determines that the amount of product consumed per task per guest for the first product 120 is 100 milliliters whereas the amount of product consumed per task per guest for the second product 120 is 120 milliliters, the controller 102 may conclude that the first product 120 is more efficient than the second product 120. For example, if both products 120 are used to clean the table 166 (FIG. 2A) and the first product 120 results in a much smaller amount consumed per task per guest, it can be concluded that the first product 120 is more efficient than the second product 120. The number of guests may be employed in step 210 in order to normalize the data so that a first business 106 (e.g. restaurant) and a second business 106 (e.g. restaurant) of similar types but with different guest capacities can be effectively compared, for the same reasons as provided for step 208.

It is worth noting that steps 202 through 210 may be repeated for each business 106. Thus, the method 200 may result in the amount of time spent per task per guest for each product 120 (from step 208) and the amount of consumed product per task per guest for each product 120 (from step 210) for each business 106 prior to performing the remaining steps 212 through 218 of the method 200.

The method 200 may then compare the amount of time spent per task per guest (from step 208) and/or the amount of consumed product per task per guest (from step 210) for each of the products 120 used at a single business in order to determine the most efficient product 120 to be employed at that business. In step 212, for each business the controller 102 may compare the fourth data from step 208 for each product to identify the product with the minimum amount of time spent per task per guest at that business 106. In one example, in step 212 the controller 102 compares 20 minutes of time spent per task for the first product 120 with 15 minutes of time spent per task for the second product 120 in order to identify the second product 120 as the most time efficient product to be employed at the business 106.

In step 212, for each business the controller 102 may compare the fifth data from step 210 for each product to identify the product with the minimum amount of product consumed per task at that business 106. In one example, in step 212 the controller 102 compares 150 milliliters of product consumed per task for the first product 120 with 170 milliliters of product consumed per task for the second product 120 in order to identify the first product 120 as the most cost-efficient product to be employed at the business 106. In step 212, the controller 102 may factor in the cost of each product 120 per unit volume (e.g. stored in the memory 103) along with the consumed amount of each product 120 in order to compare a net financial cost of each consumed product 120 per task.

The method 200 may compare the amount of time spent per task per guest for each product 120 and/or the amount of product consumed per task per guest for each product 120 among the plurality of businesses 106.

The method 200 may first determine sixth data that indicates an average amount of time spent per task per guest across the plurality of businesses 106 for each product 120. In step 214, the controller 102 may determine sixth data that indicates an average of the amount of time spent per task per guest for each product 120 across the plurality of businesses 106. In an example, in step 214 the controller 102 may determine an average amount of time spent per task per guest for the first product 120 to be 15 minutes based on the amount of time spent per task per guest for the first product 120 to be 10 minutes at the first business 106 and 20 minutes at the second business 106.

The method 200 may also determine seventh data that indicates an average amount of product consumed per task per guest across the plurality of businesses 106 for each product 120. In step 214, the controller 102 may determine seventh data that indicates an average of the amount of amount of consumed product per task per guest for each product 120 across the plurality of businesses 106. In an example, in step 214 the controller 102 may determine an average amount of consumed product per task per guest for the first product 120 to be 150 milliliters based on the consumed amount of product per task per guest for the first product 120 to be 100 milliliters at the first business 106 and 200 milliliters at the second business 106.

The method 200 may then compare the fourth data from step 208 (amount of time spent per task per guest for each product 120) for each business 106 with the sixth data from step 214 (average amount of time spent per task per guest for each product 120) across all businesses 106. In step 216, the controller 102 may determine a deviation between the fourth data from step 208 with the sixth data from step 214 for each business 106. In an example, in step 216 the controller 102 may determine a deviation of 5 minutes per task per guest for the first product 120 utilized at the second business 106. In another example, in step 216 the controller 102 may determine a deviation of 1 minute per task per guest for the first product 120 utilized at the first business 106.

The method 200 may then compare the fifth data from step 210 (amount of product consumed per task per guest for each product 120) for each business 106 with the seventh data from step 214 (average amount of product consumed per task per guest for each product 120) across all businesses 106. In step 216, the controller 102 may determine a deviation between the fifth data from step 210 with the seventh data from step 214 for each business 106. In an example, in step 216 the controller 102 may determine a deviation of 50 milliliters per task per guest for the first product 120 utilized at the second business 106. In another example, in step 216 the controller 102 may determine a deviation of 10 milliliters per task per guest for the first product 120 utilized at the first business 106.

The method 200 may then determine whether to provide feedback to one or more of the businesses 106 based on the comparison in step 216. In step 218, for each business 106 the controller 102 provides eighth data that indicates feedback to the business 106 based on the comparison in step 216. In step 218 for each business 106 the controller 102 may determine whether the deviation in step 216 exceeds a deviation threshold.

In step 214, for the automatic dishwasher cycles the controller 102 may determine an average number of automatic dishwasher cycles performed per guest over a certain time period based on the number of automatic dishwasher cycles performed per guest at each business 106 over the time period. In step 216, the controller 102 may determine a deviation between the number of automatic dishwasher cycles per guest during the time period at each business 106 with the average number of automatic dishwasher cycles per guest during the time period across all businesses. This comparison presumes that each business 106 is utilizing the same automatic dishwasher 160 or one of similar capacity and/or water and electricity usage.

In one example in step 218, the controller 102 may determine that the deviation (5 minutes) of the amount of time spent per task per guest for the first product 120 at the second business 106 exceeds a deviation threshold (e.g. 3 minutes). The controller 102 may then provide feedback to the second business 106, such as transmitting feedback to be output on a display at the second business 106 which provides suggested actions to correct the deviation. For example, the worker 152 at the second business 106 may not be using an adequate amount of the product 120 to complete the task which is causing the task to take longer and thus the recommendation may suggest using a larger amount of the product 120. As shown in FIG. 2A, for the task of cleaning the table 166 with the product 120 sprayed from the container, the worker 152 may not be spraying an adequate amount of the product 120 on the table 166, which is causing the task to take longer than necessary. The controller 102 may transmit a signal to a display at the business 106 to output this recommended corrective action.

In another example in step 218 the controller 102 may determine that the deviation (50 milliliters) of the amount of product consumed per task per guest for the first product 120 at the second business 106 exceeds a deviation threshold (e.g. 20 milliliters). The controller 102 may then provide feedback to the second business 106, such as transmitting feedback to be output on a display at the second business 106 which provides suggested actions to correct the deviation. For example, the worker 152 at the second business 106 is using too much of the first product 120 to complete the task and thus the recommendation may suggest using a smaller amount of the first product 120. As shown in FIG. 2A, for the task of cleaning the table 166 with the product 120 sprayed from the container, the worker 152 may be spraying an excessive amount of the product 120 on the table 166, which is causing the amount of consumed product to be excessive. In this example, the controller 102 may transmit a signal to a display at the business 106 to output this recommended corrective action.

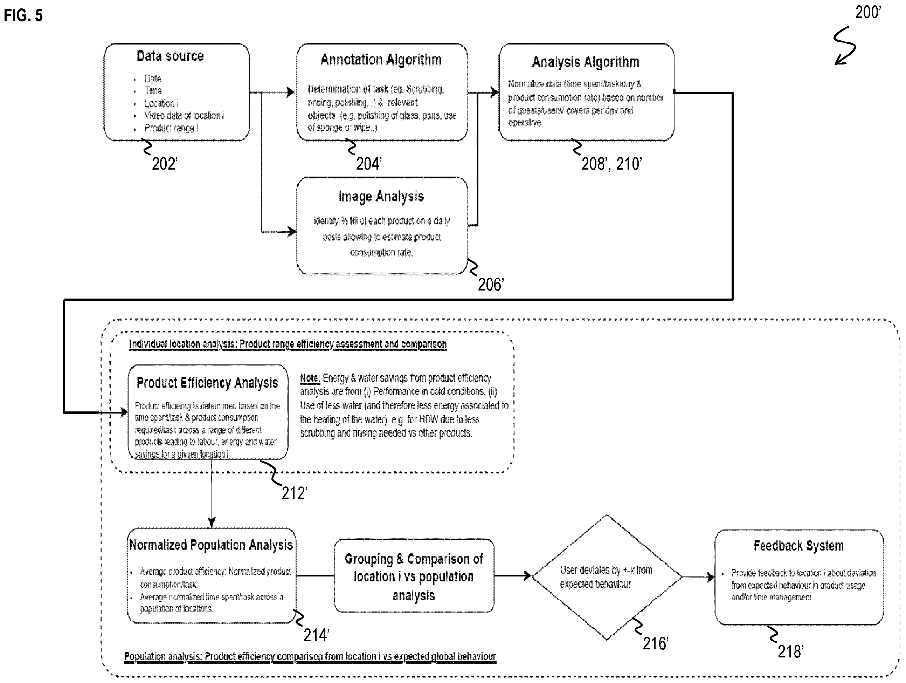

FIG. 5 is a flowchart that illustrates an example of steps of a method 200' for comparing and analyzing product efficiency, according to an embodiment. The method 200' involves steps that may be similar to the steps of the method 200.

In step 202', the controller 202 may receive data from a data source (e.g. sensor 104) that is similar to the data received in step 202. In an example, the data may be one or more of a date, time a location with index i, video data of the location with index i and a product range of the location of index i.

In step 204', the controller 202 may determine the action and the object of each task captured in the sensor data, in a similar manner as in step 204. In an example, in step 204' the annotated algorithm may be employed which involves determining a task (e.g. scrubbing, rinsing, polishing, etc.) and the relevant objects (e.g. polishing of glass, pans, use of sponge or wipe, etc.).

In step 206', the controller 202 may identify the particular product 120 used in completing the tasks in the sensor data as well as the amount of each product 120 consumed, in a similar manner as in step 206. In an example, in step 206' an image analysis may be performed such as to identify a percentage (%) fill of each product on a daily basis in order to allow an estimate of the product consumption rate.

In steps 208' and 210', the controller 202 may determine the amount of time spent per task per guest and/or the amount of consumed product per task per guest, in a similar manner as in steps 208 and 210. In an example, in steps 208' or 210', an analysis algorithm may be employed which normalizes data (e.g. time spent per task per day and a product consumption rate) based on a number of guests per day.

In step 212', the controller 102 may evaluate the amount of time spent per task and/or the amount of consumed product per task at each business 106 for each of the products 120 in order to identify one of the products 120 that is the most efficient (e.g. time efficient and/or cost efficient). In step 212' the controller 102 may determine an amount of water and/or electricity usage based on the amount of time spent per task and/or the amount of consumed product per task, in order to choose one of the products 120 that is the most efficient in terms of minimum water and/or electricity usage. In an example, the memory 103 of the controller 102 may have prestored data that indicates a known value of an amount of electricity and/or water usage for each task and the controller 102 may retrieve this data in order to determine the amount of electricity and/or water consumed per task based on using each of the products 120. The controller 102 may then recommend one of the products 120 that involves a minimum amount of electricity and/or water to be consumed per task.

In step 214', a normalized population analysis may be performed, such as an average product efficiency (e.g. normalized product consumption per task) and/or an average normalized time spent per task across a population of locations.

In step 216', a determination may be made about whether a user deviates from a certain expected behavior.

In step 218', a feedback system is provided which may provide feedback to a location (e.g. of index i) about the deviation from the expected behavior in product usage and/or time management.

### EXAMPLES

The following examples are put forth to provide those of ordinary skill in the art with a complete disclosure and description of how to perform the methods, how to make, and how to use the compositions and compounds disclosed and claimed herein. Efforts have been made to ensure accuracy with respect to numbers (e.g., amounts, temperature, etc.), but some errors and deviations should be accounted for. The purpose of the following examples is not to limit the scope of the various embodiments, but merely to provide examples illustrating specific embodiments.

### EXAMPLE 1

A purpose of this example is to demonstrate how the method 200 may be employed to determine a most time efficient product to be used in performing the cleaning task of the table 166 depicted in FIG. 2A. In this example, three different products 120 may be used at the first business 106 to clean the table 166 using the cloth 163. In step 208 the controller 102 may determine that the amount of time spent per task for the three products 120 is 10 minutes, 12 minutes, and 16 minutes, respectively. In step 212, the controller 102 may determine that the first product 120 as the lowest value of the amount of time spent per cleaning task of the table 166. Thus, in step 212 the controller 102 may provide feedback to the first business 106, such as to recommend that the first product 120 be utilized in performing the cleaning task of the table 166. The feedback may be provided on a display at the first business 106.

### EXAMPLE 2

A purpose of this example is to demonstrate how the method 200 may be employed to determine a most cost-efficient product to be used in performing the mopping task of the floor 168 depicted in FIG. 2B. In this example, three different products 120 may be used at the first business 206a to mop the floor 168 using the mop 169. In step 210 the controller 102 may determine that the amount of consumed product per task for the first, second and third products 120 is 20 milliliters, 25 milliliters and 18 milliliters, respectively. In step 212, the controller 102 may determine that the third product 120 has the lowest value of the amount of consumed product per mopping task of the floor 168. The controller 102 may also determine a financial cost of the amount of consumed product per task using prestored data in the memory 103 that indicates the cost of each product 120 per unit volume. In this example, the controller 102 may indicate that the amount of financial cost of each of the first, second and third product per task is 50 cents, 60 cents and 35 cents, respectively. Thus, in step 212 the controller 102 may provide feedback to the first business 106, such as to recommend that the third product 120 be utilized in performing the mopping task of the floor 168. The feedback may be provided on a display at the first business 106.

### EXAMPLE 3

A purpose of this example is to demonstrate how the method 200 may be employed to compare the consumption of an automatic dishwasher detergent product 120 across a plurality of businesses 106 in performing the automatic dishwashing task of the dishes 156 depicted in FIG. 2C. In this example, in step 210 the amount of product 120 consumed per cycle per guest at the first, second and third businesses 106 is 30 milliliters, 35 milliliters and 22 milliliters, respectively. In step 216, the controller 102 may determine that the amount of consumed product 120 per cycle per guest at the third business 106 has a significant deviation from the average amount of consumed product per task per guest across each of the businesses 106. In step 218, the controller 102 may provide feedback, such to recommend investigating whether the worker 152 at the third business 106 is not putting an adequate amount of the product 120 in the dishwasher receptacle for each cycle and/or to further investigate whether the dishes 156 are being adequately cleaned due to the low amount of product 120 being consumed per task per guest.

### EXAMPLE 4

The purpose of this example is to demonstrate how the method 200 can be used to communicate an average amount of water and/or electricity consumed per guest at each business 106 for performing a certain task. The controller 102 may determine the average amount of water and/or electricity consumed per guest based on the number of tasks performed in the sensor data (from step 206) at each business 106 and using prestored data in the memory 103 that includes a known amount of water and/or electricity consumed for each task. For example, in step 218 the controller 102 may provide an average amount of water and/or electricity consumed by the automatic dishwashing machine 160 per guest at each of the businesses. The controller 102 may determine the average amount of water and/or electricity consumed per guest based on the number of cycles of the automatic washing machine 160 performed per guest (from step 206) and retrieving stored data in the memory 103 that provides an average amount of water and/or electricity consumed per cycle for the particular automatic dishwasher machine 160. In step 218, as part of the feedback the controller 102 may communicate the average amount of water and/or electricity consumed per guest for the automatic dishwashing machine 160 for each business 106 as well as comparing that amount with the average amount for the other businesses 106 of the same type. The controller 102 may also provide feedback based on this average amount of water and/or electricity consumed per guest. For example, if the average amount of water and/or electricity consumed per guest for business 106 is much higher than the other businesses 106 of the same type, the controller 102 may recommend investigating to make sure that the worker 152 is filling the automatic dishwasher 160 with dishes 156 prior to commencing each cycle.

### EXAMPLE 5

A purpose of this example is to demonstrate how the method 200 may be employed to compare the amount of time spent per task per guest for the polishing task depicted in FIG. 2E across a plurality of businesses 106. In this example, in step 208 the controller 102 may determine that the amount of time spent per polishing task per guest is 5 minutes, 8 minutes and 13 minutes, respectively, for three different businesses 106. In step 216, the controller 102 may determine that the amount of time spent per polishing task per guest is much larger at the third business 106. In step 218, the controller 102 may provide feedback to the third business 106, such as to investigate whether the automatic dishwasher 160 is adequately cleaning the glasses 162 prior to the polishing task as this may be causing the excessive amount of time spent per polishing task at the third business 106.

### EXAMPLE 6

A purpose of this example is to demonstrate how the method 200 may be employed to compare the amount of time spent per task per guest for the hand dish washing task depicted in FIG. 2D for a dish washing detergent product 120 across a plurality of businesses 106. In this example, in step 208 the controller 102 may determine that the amount of time spent per hand dish washing task per guest is 15 minutes, 30 minutes and 17 minutes, respectively, for three different businesses 106. In step 216, the controller 102 may determine that the amount of time spent per hand dish washing task per guest is much larger at the second business 106. In step 218, the controller 102 may provide feedback to the second business 106, such as to investigate whether the worker 152 is using an adequate amount of the dishwashing detergent product 120. Additionally, in step 218 the controller may recommend investigating whether the worker 152 is waiting too long to clean the dishes 156 after use which may be increasing the average amount of time per hand dishwashing task.

### EXAMPLE 7

A purpose of this example is to demonstrate how the method 200 may be employed to compare the amount of time spent per task per guest for the loading of the automatic dishwasher task depicted in FIG. 2C across a plurality of businesses 106. In this example, in step 208 the controller 102 may determine that the amount of time spent per loading task per guest is 15 minutes, 30 minutes and 27 minutes, respectively, for the businesses 106. In step 216, the controller 102 may determine that the amount of time spent per loading task per guest is much smaller at the first business 106. In step 218, the controller 102 may provide feedback to the first business 106, such as to investigate whether the worker 152 is completely filling the automatic dishwasher 160 with plates 156 before commencing a cycle, which may be the cause of the time spent loading the dishwasher per guest being much lower than the other businesses.

### EXAMPLE 8

A purpose of this example is to demonstrate how the method 200 may be employed to compare the amount of product consumed for each floor mopping task depicted in FIG. 2B across a plurality of businesses 106. In this example, in step 208 the controller 102 may determine that the amount of consumed product 120 per mopping task per guest is 23 milliliters, 35 milliliters and 25 milliliters, respectively, for the three different businesses 106. In step 216, the controller 102 may determine that the amount of consumed product 120 per task per guest is much larger at the second business 106. In step 218, the controller 102 may then provide feedback to the second business 106, such as investigating whether the worker 152 is adding too much product 120 to the bucket 167 when mixing the product 120 with the water and thus using an unnecessarily concentrated mixture of the product 120 in mopping the floor 168, thereby leading to an excessive amount of product 120 consumed per task per guest.

### EXAMPLE 9

It is worth noting that the method of the present disclosure can be utilized in the context of soft surfaces, e.g., textiles, clothing, tablecloths, towels, napkins, etc. The method 200 may be utilized as described regarding the use of laundry detergent, fabric softener, laundry scent boosters, bleach, dryer sheets, the like, as well as tasks associated with laundering textiles. For example, the method 200 can be utilized to compare laundry detergents, for example, amount used of one versus the other, as well as evaluation of the job done, e.g. cleanliness of the textile, ease of pour, etc. As another example, the method may be utilized to compare the effectiveness of bleach product based upon the amount and brand of bleach utilized. As another example, the method of the present disclosure can identify and analyze the following tasks and can determine the time and duration of each of the tasks. Examples of tasks utilized in laundry are: (i) loading a textile washing machine; (ii) selection of a cycle of the washing machine, along with a determination of whether the cycle selection is appropriate for the textiles being loaded; (iii) unloading textiles from the washing machine; (iii) pre-treating one or more textiles before placing in a washing machine; (iv) loading washed textiles into an automatic dryer; (v) unloading dried textiles from an automatic dryer; (vi) providing laundry products, e.g., detergent, bleach, fabric softener, and/or scent boosters, into the washing machine; (vii) providing laundry products, e.g., dryer sheets, dryer bars (installation of new / replacement of old) to the automatic dryer; (viii) sorting textiles from the dryer by color and/or type; (ix) folding textiles from the dryer; and (x) storing folded textiles for later use.

The foregoing tasks may be evaluated as described herein for time and duration of the tasks as well as normalizing said time / per guest. Similarly, the method of the present disclosure can evaluate the amount of laundry products utilized for either one or both of the washer and/or dryer and normalize the amounts per guest. This data can be gathered across multiple business locations or within a single location to compare, for example, one washer versus another. The average data may then be compared to the individual data to determine any anomalies / outages. This feedback can be provided to a user for corrective action.

Additional tasks / items may be identified utilizing the methods of the present disclosure. For example, image data may be utilized to identify: (i) textile cleaning failures, i.e., stains which exist post washing; (ii) colors and/or types of textiles / fabrics being placed into the washing machine; (iii) amount of textiles being placed into the washing machine and/or automatic dryer; (iv) set up of the washing machine, identification of automatic feed system for detergents, etc. or manual feed system, detergent added manually; (v) use of olfactory senses for textiles post wash to evaluate odor removal. Similarly, these additional tasks may be evaluated for time and duration, amount of product utilized. Normalization for each of the additional tasks may be performed as well as described herein. Averaging of the additional tasks may also occur as described herein. Feedback based on comparison of the average and individual tasks may be provided to a user. However, it is also contemplated where feedback is provided to the user regarding the occurrence of additional task, without normalization and/or averaging, e.g., (i), (ii) if wrong colors and /or textile types are combined; (iii) if overloading or underloading of a washing machine or dryer is occurring; (iv) if products are being added to an automatic feed system; and (v) if analysis shows a negative reaction to the use of olfactory senses.

### Hardware Overview

FIG. 6 is a block diagram that illustrates a computer system 300 upon which the methods of the present disclosure may be implemented. Computer system 300 includes a communication mechanism such as a bus 310 for passing information between other internal and external components of the computer system 300. Information is represented as physical signals of a measurable phenomenon Computer system 300, or a portion thereof, constitutes a means for performing one or more steps of one or more methods described herein. In some aspects, the computer system 300 is a standard computer (e.g. PC desktop or laptop computer). In other aspects, the computer system 300 is a mobile device, such as a smartphone or tablet, for example.

One or more processors 302 for processing information are coupled with the bus 310. A processor 302 performs a set of operations on information. The set of operations include bringing information in from the bus 310 and placing information on the bus 310. The set of operations also typically include comparing two or more units of information, shifting positions of units of information, and combining two or more units of information, such as by addition or multiplication. A sequence of operations to be executed by the processor 302 constitutes computer instructions.

Computer system 300 also includes a memory 304 coupled to bus 310. The memory 304, such as a random-access memory (RAM) or other dynamic storage device, stores information including computer instructions. Dynamic memory allows information stored therein to be changed by the computer system 300. RAM allows a unit of information stored at a location called a memory address to be stored and retrieved independently of information at neighboring addresses. The memory 304 is also used by the processor 302 to store temporary values during execution of computer instructions. The computer system 300 also includes a read only memory (ROM) 306 or other static storage device coupled to the bus 310 for storing static information, including instructions, that is not changed by the computer system 300. Also coupled to bus 310 is a non-volatile (persistent) storage device 308, such as a magnetic disk or optical disk, for storing information, including instructions, that persists even when the computer system 300 is turned off or otherwise loses power.

Information, including instructions, is provided to the bus 310 for use by the processor from an input device 312, such as a keyboard or keypad or touchscreen containing alphanumeric keys operated by a human user, or a sensor. A sensor detects conditions in its vicinity and transforms those detections into signals compatible with the signals used to represent information in computer system 300. Other input devices coupled to bus 310, used primarily for interacting with humans, include a display device 314, such as a cathode ray tube (CRT) or a liquid crystal display (LCD), for presenting images, and a pointing device, such as a mouse or a trackball or cursor direction keys, for controlling a position of a small cursor image presented on the display 314 and issuing commands associated with graphical elements presented on the display 314. In some aspects, the input devices 312 are external to the computer system 300 (e.g. display or mouse for a standard PC computer). In other aspects, the input devices 312 are integral with or form a part of the computer system 300 (e.g. display or touchscreen keypad on a smartphone or tablet).

Computer system 300 also includes one or more instances of a communications interface 370 coupled to bus 310. Communication interface 370 provides a two-way communication coupling to a variety of external devices that operate with their own processors, such as printers, scanners and external disks. In general, the coupling is with a network link 378 that is connected to a local network 380 to which a variety of external devices with their own processors are connected.

The term computer-readable medium is used herein to refer to any medium that participates in providing information to processor 302, including instructions for execution. Such a medium may take many forms, including, but not limited to, non-volatile media, volatile media and transmission media. Non-volatile media include, for example, optical or magnetic disks, such as storage device 308. Volatile media include, for example, dynamic memory 304. Transmission media include, for example, coaxial cables, copper wire, fiber optic cables, and waves that travel through space without wires or cables, such as acoustic waves and electromagnetic waves, including radio, optical and infrared waves. The term computer-readable storage medium is used herein to refer to any medium that participates in providing information to processor 302, except for transmission media.

Network link 378 typically provides information communication through one or more networks to other devices that use or process the information. For example, network link 378 may provide a connection through local network 380 to equipment 384 operated by an Internet Service Provider (ISP). ISP equipment 384 in turn provides data communication services through the public, world-wide packet-switching communication network of networks now commonly referred to as the Internet 390. A computer called a server 392 connected to the Internet provides a service in response to information received over the Internet. For example, server 392 provides information representing video data for presentation at display 314.

The invention is related to the use of computer system 300 for implementing the techniques described herein. According to one example of the invention, those techniques are performed by computer system 300 in response to processor 302 executing one or more sequences of one or more instructions contained in memory 304. Such instructions, also called software and program code, may be read into memory 304 from another computer-readable medium such as storage device 308. Execution of the sequences of instructions contained in memory 304 causes processor 302 to perform the method steps described herein.

### Combinations

Example A: A method comprising: receiving, at a processor, first data that comprises sensor data captured by a sensor of one or more tasks performed on one or more textiles using one or more products at each of a plurality of businesses; determining, with the processor, second data that identifies a quantity and a duration of each of the one or more tasks based on the sensor data; determining, with the processor, third data that indicates an amount of the one or more laundry products consumed in performing the one or more tasks, based on the sensor data; determining, with the processor, fourth data that indicates an amount of time spent per task per guest for each of the one or more products based on the second data and a number of guests at each business; determining, with the processor, fifth data that indicates an amount of the one or more products consumed per task per guest for each of the one or more products based on the second data, the third data and the number of guests; for each of the plurality of businesses, comparing, with the processor, one or more of; the fourth data for each of the one or more products to identify one of the one or more products having a minimum value of the amount of time spent per task per guest, and the fifth data for each of the one or more products to identify one of the one or more products having a minimum value of the amount of product consumed per task per guest; for the plurality of businesses, determining, with the processor, one or more of; sixth data that indicates an average of the fourth data across the plurality of the businesses; seventh data that indicates an average of the fifth data across the plurality of businesses; for each of the plurality of businesses, comparing, with the processor, one or more of; the fourth data for each of the plurality of businesses with the sixth data, and the fifth data for each of the plurality of businesses with the seventh data; and providing, with the processor, eighth data that indicates feedback to one or more of the businesses based on the comparing step.

Example A1: The method of Example A, wherein the sensor data is image data captured with a camera of the one or more tasks performed at each business.

Example A2: The method of any of Examples A and A1, wherein the method further comprises capturing, with the camera, the image data of the one or more tasks performed at each business.

Example A3: The method of Example A1, wherein the image data comprises: video data captured by a first camera at each business, wherein the determining the second data comprises processing, with the processor, the video data to identify the quantity and duration of the one or more tasks; and still image data captured by a second camera at each businesses, wherein the still image data comprises still images captured at regular time increments, wherein the determining the third data comprises processing, with the processor, the still image data to determine the amount of the one or more products consumed in performing the one or more tasks.

Example A4: The method of Example A3, wherein the processing the video data comprises identifying, with the processor, the action of the one or more tasks and the object of the action of the one or more tasks based on the video data; and wherein the processing the still image data comprises identifying, with the processor, each product based on identifying one of a label on a container of each product or a shape of the container and identifying, with the processor, the amount of each product consumed for each task based on comparing still images captured over the regular time increments during the duration of each task.

Example A5: The method of any of Examples A-A4, wherein the plurality of businesses comprise businesses of a same type and wherein the identifier of each business uniquely identifies each business within the plurality of businesses having the same type.

Example A6: The method of Example A5, wherein the same type of the businesses comprises one or more of a restaurant type, a hotel type, a hospital type, and a nursing home type.

Example A7: The method of any of Example A to A6, wherein the one or more tasks comprise at least one of: (i) loading a textile washing machine; (ii) unloading a textile washing machine; (iii) pre-treating one or more textiles before placing in a washing machine; (iv) loading washed textiles into an automatic dryer; (v) unloading dried textiles from an automatic dryer; (vi) providing laundry products to the washer; (vii) providing laundry products to the automatic dryer; (viii) sorting textiles from the dryer by color and/or type; (ix) folding textiles from the dryer; and (x) storing folded textiles for later use and optionally : (i) textile cleaning failures, i.e., stains which exist post washing; (ii) colors and/or types of textiles / fabrics being placed into the washing machine; (iii) amount of textiles being placed into the washing machine and/or automatic dryer; (iv) set up of the washing machine, identification of automatic feed system for detergents, etc. or manual feed system, detergent added manually; (v) use of olfactory senses for textiles post wash to evaluate odor removal.

Example A8: The method of any of Examples A to A6, wherein one or more tasks include: (i) textile cleaning failures, i.e., stains which exist post washing; (ii) colors and/or types of textiles / fabrics being placed into the washing machine; (iii) amount of textiles being placed into the washing machine and/or automatic dryer; (iv) set up of the washing machine, identification of automatic feed system for detergents, etc. or manual feed system, detergent added manually; (v) use of olfactory senses for textiles post wash to evaluate odor removal.

Example A9: The method of any of Examples A to A8, wherein the comparing the fourth data for each of the plurality of businesses with the sixth data comprises determining whether a deviation between the fourth data for each business and the sixth data exceeds a first deviation threshold; and wherein the comparing the fifth data for each of the plurality of businesses with the seventh data comprises determining whether a deviation between the fifth data for each business and the seventh data exceeds a second deviation threshold.

Example A10: The method of Examples A to A9, wherein the providing step comprises outputting, on a display located at each of the one or more businesses, ninth data that indicates the feedback to the one or more businesses.

Example B: A method comprising: receiving, at a processor, first data from each of a plurality of businesses, wherein the first data indicates sensor data of one or more tasks performed on one or more textiles at each business, a capture date of the sensor data, a capture time of the sensor data, an identifier of each business, a number of guests at each business, and an identifier of one or more products used at each business; determining, with the processor, second data that identifies a quantity and a duration of each of the one or more tasks in the sensor data comprising determining an action of the one or more tasks and determining an object of the action of the one or more tasks based on the sensor data and the capture time of the sensor data; determining, with the processor, third data that indicates an amount of the one or more products consumed in performing the one or more tasks, based on the sensor data; determining, with the processor, fourth data that indicates an amount of time spent per task per guest for each of the one or more products based on the second data and the number of guests; determining, with the processor, fifth data that indicates an amount of the one or more products consumed per task per guest for each of the one or more products based on the second data, the third data and the number of guests; for each of the plurality of businesses, comparing, with the processor, one or more of; the fourth data for each of the one or more products to identify one of the one or more products having a minimum value of the amount of time spent per task per guest, and the fifth data for each of the one or more products to identify one of the one or more products having a minimum value of the amount of product consumed per task per guest; for the plurality of businesses, determining, with the processor, one or more of; sixth data that indicates an average of the fourth data across the plurality of the businesses; seventh data that indicates an average of the fifth data across the plurality of businesses; for each of the plurality of businesses, comparing, with the processor, one or more of; the fourth data for each of the plurality of businesses with the sixth data, and the fifth data for each of the plurality of businesses with the seventh data; and providing, with the processor, eighth data that indicates feedback to one or more of the businesses based on the comparing step.

Example B1: The method of Example B, wherein the sensor data is image data captured with a camera of the one or more tasks performed at each business.

Example B2: The method of any of Example B1, wherein the method further comprises capturing, with the camera, the image data of the one or more tasks performed at each business.

Example B3: The method of Example B1, wherein the image data comprises: video data captured by a first camera at each business, wherein the determining the second data comprises processing, with the processor, the video data to identify the quantity and duration of the one or more tasks; and still image data captured by a second camera at each businesses, wherein the still image data comprises still images captured at regular time increments, wherein the determining the third data comprises processing, with the processor, the still image data to determine the amount of the one or more products consumed in performing the one or more tasks.

Example B4: The method of Example B3, wherein the processing the video data comprises identifying, with the processor, the action of the one or more tasks and the object of the action of the one or more tasks based on the video data; and wherein the processing the still image data comprises identifying, with the processor, each product based on identifying one of a label on a container of each product or a shape of the container and identifying, with the processor, the amount of each product consumed for each task based on comparing still images captured over the regular time increments during the duration of each task.

Example B5: The method of any of Examples B-B4, wherein the plurality of businesses comprise businesses of a same type and wherein the identifier of each business uniquely identifies each business within the plurality of businesses having the same type.

Example B6: The method of Example B5, wherein the same type of the businesses comprises one or more of a restaurant type, a hotel type, a hospital type, and a nursing home type.

Example B7: The method of any of Example B to B6, wherein the one or more tasks comprise at least one of: (i) loading a textile washing machine; (ii) unloading a textile washing machine; (iii) pre-treating one or more textiles before placing in a washing machine; (iv) loading washed textiles into an automatic dryer; (v) unloading dried textiles from an automatic dryer; (vi) providing laundry products to the washer; (vii) providing laundry products to the automatic dryer; (viii) sorting textiles from the dryer by color and/or type; (ix) folding textiles from the dryer; and (x) storing folded textiles for later use and optionally : (i) textile cleaning failures, i.e., stains which exist post washing; (ii) colors and/or types of textiles / fabrics being placed into the washing machine; (iii) amount of textiles being placed into the washing machine and/or automatic dryer; (iv) set up of the washing machine, identification of automatic feed system for detergents, etc. or manual feed system, detergent added manually; (v) use of olfactory senses for textiles post wash to evaluate odor removal.

Example B8: The method of any of Example B to B6, wherein the one or more tasks comprise at least one of: (i) loading a textile washing machine; (ii) unloading a textile washing machine; (iii) pre-treating one or more textiles before placing in a washing machine; (iv) loading washed textiles into an automatic dryer; (v) unloading dried textiles from an automatic dryer; (vi) providing laundry products to the washer; (vii) providing laundry products to the automatic dryer; (viii) sorting textiles from the dryer by color and/or type; (ix) folding textiles from the dryer; and (x) storing folded textiles for later use.

Example B9: The method of any of Examples B to B8, wherein the comparing the fourth data for each of the plurality of businesses with the sixth data comprises determining whether a deviation between the fourth data for each business and the sixth data exceeds a first deviation threshold; and wherein the comparing the fifth data for each of the plurality of businesses with the seventh data comprises determining whether a deviation between the fifth data for each business and the seventh data exceeds a second deviation threshold.

Example B10: The method of Examples B to B9, wherein the providing step comprises outputting, on a display located at each of the one or more businesses, ninth data that indicates the feedback to the one or more businesses.

Example C: A system comprising: at least one processor; a sensor; and at least one memory including one or more sequences of instructions; the at least one memory and the one or more sequences of instructions configured to, with the at least one processor, cause the system to perform at least the following; receive first data from each of a plurality of businesses, wherein the first data indicates sensor data captured by the sensor of one or more tasks performed at each business; determine second data that identifies a quantity and a duration of each of the one or more tasks based on the sensor data; determine third data that indicates an amount of the one or more products consumed in performing the one or more tasks, based on the sensor data; determine fourth data that indicates an amount of time spent per task per guest for each of the one or more products based on the second data and a number of guests at each business; determine fifth data that indicates an amount of the one or more products consumed per task per guest for each of the one or more products based on the second data, the third data and the number of guests; for each of the plurality of businesses, compare one or more of the fourth data for each of the one or more products to identify one of the one or more products having a minimum value of the amount of time spent per task per guest, and the fifth data for each of the one or more products to identify one of the one or more products having a minimum value of the amount of product consumed per task per guest; for the plurality of businesses, determine one or more of sixth data that indicates an average of the fourth data across the plurality of the businesses and seventh data that indicates an average of the fifth data across the plurality of businesses; for each of the plurality of businesses, compare one or more of the fourth data for each of the plurality of businesses with the sixth data, and the fifth data for each of the plurality of businesses with the seventh data; and provide eighth data that indicates feedback to one or more of the businesses based on the comparing step.

Example C1: The system of Example C, wherein the sensor comprises a first camera and a second camera and wherein: the first cameras is configured to capture video data at each business, wherein the processor is configured to determine the second data based on processing the video data to identify the quantity and duration of the one or more tasks; and the second camera is configured to capture still image data comprises still images at regular time increments, wherein the processor is configured to process the still image data to determine the amount of the one or more products consumed in performing the one or more tasks.

Example C2: The system of Example C1, wherein the processor is configured to process the video data to identify the action of the one or more tasks and the object of the action of the one or more tasks; and wherein the processor is configured to process the still image data to identify each product based on identification of one of a label on a container of each product or a shape of the container and based on identification of the amount of each product consumed for each task based on a comparison of the still images captured over the regular time increments during the duration of each task.

Example C3: The system of any of Examples C to C2, wherein the plurality of businesses comprise businesses of a same type and wherein the identifier of each business uniquely identifies each business within the plurality of businesses having the same type.

Examples C4: The system of Example C3, wherein the same type of the businesses comprises one or more of a restaurant type, a hotel type, a hospital type, and a nursing home type.

Example C5: The method of any of Example C to C4, wherein the one or more tasks comprise at least one of: (i) loading a textile washing machine; (ii) unloading a textile washing machine; (iii) pre-treating one or more textiles before placing in a washing machine; (iv) loading washed textiles into an automatic dryer; (v) unloading dried textiles from an automatic dryer; (vi) providing laundry products to the washer; (vii) providing laundry products to the automatic dryer; (viii) sorting textiles from the dryer by color and/or type; (ix) folding textiles from the dryer; and (x) storing folded textiles for later use and optionally : (i) textile cleaning failures, i.e., stains which exist post washing; (ii) colors and/or types of textiles / fabrics being placed into the washing machine; (iii) amount of textiles being placed into the washing machine and/or automatic dryer; (iv) set up of the washing machine, identification of automatic feed system for detergents, etc. or manual feed system, detergent added manually; (v) use of olfactory senses for textiles post wash to evaluate odor removal.

Example C6: The method of any of Examples C to C5, wherein the one or more tasks comprise at least one of: (i) loading a textile washing machine; (ii) unloading a textile washing machine; (iii) pre-treating one or more textiles before placing in a washing machine; (iv) loading washed textiles into an automatic dryer; (v) unloading dried textiles from an automatic dryer; (vi) providing laundry products to the washer; (vii) providing laundry products to the automatic dryer; (viii) sorting textiles from the dryer by color and/or type; (ix) folding textiles from the dryer; and (x) storing folded textiles for later use.

Example C7: The system of any of Examples C to C6, further comprising the one or more products, wherein the one or more products are one or more cleaning products used to clean a surface within a kitchen area or a bathroom area or used to clean dishes within the kitchen area.

Example D: A system comprising: at least one processor; a sensor; and at least one memory including one or more sequences of instructions; the at least one memory and the one or more sequences of instructions configured to, with the at least one processor, cause the system to perform at least the following; receive first data from each of a plurality of businesses, wherein the first data indicates sensor data captured by the sensor of one or more tasks performed at each business; determine second data that identifies a quantity and a duration of each of the one or more tasks based on the sensor data; determine third data that indicates an amount of the one or more products consumed in performing the one or more tasks, based on the sensor data; determine fourth data that indicates an amount of time spent per task per guest for each of the one or more products based on the second data and a number of guests at each business; determine fifth data that indicates an amount of the one or more products consumed per task per guest for each of the one or more products based on the second data, the third data and the number of guests; for each of the plurality of businesses, compare one or more of the fourth data for each of the one or more products to identify one of the one or more products having a minimum value of the amount of time spent per task per guest, and the fifth data for each of the one or more products to identify one of the one or more products having a minimum value of the amount of product consumed per task per guest; for the plurality of businesses, determine one or more of sixth data that indicates an average of the fourth data across the plurality of the businesses and seventh data that indicates an average of the fifth data across the plurality of businesses; for each of the plurality of businesses, compare one or more of the fourth data for each of the plurality of businesses with the sixth data, and the fifth data for each of the plurality of businesses with the seventh data; and provide eighth data that indicates feedback to one or more of the businesses based on the comparing step.

Example D1: The system of Example D, wherein the sensor comprises a first camera and a second camera and wherein:
the first cameras is configured to capture video data at each business, wherein the processor is configured to determine the second data based on processing the video data to identify the quantity and duration of the one or more tasks; and
the second camera is configured to capture still image data comprises still images at regular time increments, wherein the processor is configured to process the still image data to determine the amount of the one or more products consumed in performing the one or more tasks.

Example D2: The system of Example D1, wherein the processor is configured to process the video data to identify the action of the one or more tasks and the object of the action of the one or more tasks; and wherein the processor is configured to process the still image data to identify each product based on identification of one of a label on a container of each product or a shape of the container and based on identification of the amount of each product consumed for each task based on a comparison of the still images captured over the regular time increments during the duration of each task.

Example D3: The system of any of Examples D to D2, wherein the plurality of businesses comprise businesses of a same type and wherein the identifier of each business uniquely identifies each business within the plurality of businesses having the same type.

Example D4: The system of Example D3, wherein the same type of the businesses comprises one or more of a restaurant type, a hotel type, a hospital type, and a nursing home type.

Example D5: The system of any of Examples D to D4, wherein the one or more tasks are performed in one of a kitchen area or a bathroom area within each business and wherein the one or more tasks comprise at least one of: hand washing dishes within the kitchen area; automatically washing dishes within the kitchen area with an automatic dishwasher; loading dishes into the automatic dishwasher; unloading dishes from the automatic dishwasher; polishing glasses removed from the automatic dishwasher; cleaning a surface within the kitchen area or the bathroom area; and cleaning a floor within the kitchen area or the bathroom area.

Example D6: The system of any of Examples D to D5, further comprising the one or more products, wherein the one or more products are one or more cleaning products used to clean a surface within a kitchen area or a bathroom area or used to clean dishes within the kitchen area.

### Further Definitions and Cross-References

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Every document cited herein, including any cross referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present disclosure have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. A method comprising:
receiving, at a processor, first data that comprises sensor data captured by a sensor of one or more tasks performed on a surface using one or more products at each of a plurality of businesses;
determining, with the processor, second data that identifies a quantity and a duration of each of the one or more tasks based on the sensor data;
determining, with the processor, third data that indicates an amount of the one or more products consumed in performing the one or more tasks, based on the sensor data;
determining, with the processor, fourth data that indicates an amount of time spent per task per guest for each of the one or more products based on the second data and a number of guests at each business;
determining, with the processor, fifth data that indicates an amount of the one or more products consumed per task per guest for each of the one or more products based on the second data, the third data and the number of guests;
for each of the plurality of businesses, comparing, with the processor, one or more of;
the fourth data for each of the one or more products to identify one of the one or more products having a minimum value of the amount of time spent per task per guest, and
the fifth data for each of the one or more products to identify one of the one or more products having a minimum value of the amount of product consumed per task per guest;
for the plurality of businesses, determining, with the processor, one or more of;
sixth data that indicates an average of the fourth data across the plurality of the businesses;
seventh data that indicates an average of the fifth data across the plurality of businesses;
for each of the plurality of businesses, comparing, with the processor, one or more of;
the fourth data for each of the plurality of businesses with the sixth data, and
the fifth data for each of the plurality of businesses with the seventh data; and
providing, with the processor, eighth data that indicates feedback to one or more of the businesses based on the comparing step.

2. The method of claim 1, wherein the sensor data is image data captured with a camera of the one or more tasks performed at each business.

3. The method of claim 2, wherein the method further comprises capturing, with the camera, the image data of the one or more tasks performed at each business.

4. The method of any of claims 2 and 3, wherein the image data comprises:
video data captured by a first camera at each business, wherein the determining the second data comprises processing, with the processor, the video data to identify the quantity and duration of the one or more tasks; and
still image data captured by a second camera at each businesses, wherein the still image data comprises still images captured at regular time increments, wherein the determining the third data comprises processing, with the processor, the still image data to determine the amount of the one or more products consumed in performing the one or more tasks.

5. The method of claim 4, wherein the processing the video data comprises identifying, with the processor, the action of the one or more tasks and the object of the action of the one or more tasks based on the video data; and wherein the processing the still image data comprises identifying, with the processor, each product based on identifying one of a label on a container of each product or a shape of the container and identifying, with the processor, the amount of each product consumed for each task based on comparing still images captured over the regular time increments during the duration of each task.

6. The method of any of the preceding claims, wherein the plurality of businesses comprise businesses of a same type and wherein the identifier of each business uniquely identifies each business within the plurality of businesses having the same type.

7. The method of claim 6, wherein the same type of the businesses comprises one or more of a restaurant type, a hotel type, a hospital type, and a nursing home type.

8. The method of any of the preceding claims, wherein the one or more tasks are performed in one of a kitchen area or a bathroom area within each business.

9. The method of claim 8, wherein the one or more tasks comprise at least one of:
hand washing dishes within the kitchen area;
automatically washing dishes within the kitchen area with an automatic dishwasher;
loading dishes into the automatic dishwasher;
unloading dishes from the automatic dishwasher;
polishing glasses removed from the automatic dishwasher;
cleaning a surface within the kitchen area or the bathroom area; and
cleaning a floor within the kitchen area or the bathroom area.

10. The method of any of the preceding claims, wherein the one or more products are one or more cleaning products used to clean the surface within a kitchen area or a bathroom area or used to clean the surface of dishes within the kitchen area.

11. The method of any of the preceding claims,
wherein the comparing the fourth data for each of the plurality of businesses with the sixth data comprises determining whether a deviation between the fourth data for each business and the sixth data exceeds a first deviation threshold; and
wherein the comparing the fifth data for each of the plurality of businesses with the seventh data comprises determining whether a deviation between the fifth data for each business and the seventh data exceeds a second deviation threshold.

12. The method of any of the preceding claims, wherein the providing step comprises outputting, on a display located at each of the one or more businesses, ninth data that indicates the feedback to the one or more businesses.

13. A method comprising:
receiving, at a processor, first data from each of a plurality of businesses, wherein the first data indicates sensor data of one or more tasks performed on a surface at each business, a capture date of the sensor data, a capture time of the sensor data, an identifier of each business, a number of guests at each business, and an identifier of one or more products used at each business;
determining, with the processor, second data that identifies a quantity and a duration of each of the one or more tasks in the sensor data comprising determining an action of the one or more tasks and determining an object of the action of the one or more tasks based on the sensor data and the capture time of the sensor data;
determining, with the processor, third data that indicates an amount of the one or more products consumed in performing the one or more tasks, based on the sensor data;
determining, with the processor, fourth data that indicates an amount of time spent per task per guest for each of the one or more products based on the second data and the number of guests;
determining, with the processor, fifth data that indicates an amount of the one or more products consumed per task per guest for each of the one or more products based on the second data, the third data and the number of guests;
for each of the plurality of businesses, comparing, with the processor, one or more of;
the fourth data for each of the one or more products to identify one of the one or more products having a minimum value of the amount of time spent per task per guest, and the fifth data for each of the one or more products to identify one of the one or more products having a minimum value of the amount of product consumed per task per guest;
for the plurality of businesses, determining, with the processor, one or more of;
sixth data that indicates an average of the fourth data across the plurality of the businesses;
seventh data that indicates an average of the fifth data across the plurality of businesses;
for each of the plurality of businesses, comparing, with the processor, one or more of;
the fourth data for each of the plurality of businesses with the sixth data, and
the fifth data for each of the plurality of businesses with the seventh data; and
providing, with the processor, eighth data that indicates feedback to one or more of the businesses based on the comparing step.
